(19) **Europäisches Patentamt / European Patent Office / Office européen des brevets**

(11) **EP 4 295 083 B1**

(12) **EUROPEAN PATENT SPECIFICATION**

(45) Date of publication and mention
of the grant of the patent:
**29.10.2025 Bulletin 2025/44**

(21) Application number: **22709287.1**

(22) Date of filing: **16.02.2022**

(51) International Patent Classification (IPC):
**F23D 14/02** *(2006.01)*     **F23N 1/02** *(2006.01)*
**F23N 5/24** *(2006.01)*     **F23N 5/18** *(2006.01)*

(52) Cooperative Patent Classification (CPC):
**F23D 14/02; F23N 1/022; F23N 5/242;**
F23C 2900/9901; F23N 2005/181; F23N 2005/185;
F23N 2233/08; F23N 2239/04; F23N 2241/06;
Y02B 30/00

(86) International application number:
**PCT/EP2022/053724**

(87) International publication number:
**WO 2022/175291 (25.08.2022 Gazette 2022/34)**

(54) **METHOD FOR OPERATING A GAS HEATER**

VERFAHREN ZUM BETRIEB EINER GASHEIZUNG

PROCÉDÉ DE FONCTIONNEMENT D'UN CHAUFFAGE AU GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2021 EP 21157991**

(43) Date of publication of application:
**27.12.2023 Bulletin 2023/52**

(73) Proprietor: **BDR Thermea Group B.V.
7332 BD Apeldoorn (NL)**

(72) Inventors:
• **PISONI, Andrea
7332 Apeldoorn (NL)**

• **TEMPERATO, Sebastiano
7332 Apeldoorn (NL)**
• **RUTGERS, Job
7332 Apeldoorn (NL)**

(74) Representative: **Grabovac, Dalibor
AAP Patentanwaltskanzlei Grabovac
Pfeivestlstr. 12
81243 München (DE)**

(56) References cited:
**EP-A1- 3 825 623     DE-A1- 102015 110 402
FR-A1- 2 921 461**

**Description**

The invention relates to a method for operating a gas heater. Additionally, the invention relates to a gas heater and to a boiler with such a gas heater. In addition, the invention relates to a heating system with such a gas heater and/or boiler and a use of such a gas heater and/or boiler. Furthermore, the invention relates to a computer program product.

A plurality of gas heaters is known from the prior art. A gas heater usually comprises a mixing chamber in which gas, in particular air, is mixed with fuel gas. The mixed gas is supplied to a burner of a gas heater. Such gas heaters can be used in boilers for example. The boiler comprises a heat exchanger by means of which water is heated by the heat provided by the gas heater.

US5,486,107A is directed to an improved determination of fuel characteristics including heating value and oxygen demand and Wobbe Index or Number for more accurate fuel metering and combustion control in terms of accurately determining the amount of oxygen needed for complete combustion for a given type and amount of fuel which is valid for a wide range of fuel compositions and more accurate inasmuch as it is less sensitive to errors in the measured parameters from which the values are derived *and discloses* a method for determining thermophysical or thermochemical property values of a natural or other hydrocarbon-based gaseous fuel gas with microbridge type sensors, comprising the steps of: applying the fuel to a static microbridge type sensor to obtain the thermal conductivity value of the fuel wherein the microbridge type sensor is fluidly coupled to receive the fuel and provide a signal value, thermal conductivity, k, of the fuel; applying the fuel to a static microbridge type sensor to obtain the specific heat value of the fuel wherein the microbridge type sensor is fluid coupled to receive the fuel and provide a signal value, specific heat, cp, of the fuel; correcting the values of signals k and cp through the use of a plurality of measured sensor signal values k and cp taken at different temperatures so as to be able to process these values to obtain corresponding values at reference conditions for the fuel; processing the plurality of measured different temperature values of cp to obtain a value for dcp /dT at the said reference condition of $c_{ps}$, processing the plurality of measured different temperature values of $k_s$ to obtain a value for dk/dT at the said reference condition of $k_s$, processing in a processor the values obtained in the previous steps to obtain the desired property of the fuel according to a relationship selected from:

$$Y_s = A_0 + A_1 k_s^{n1} c_{ps}^{m1} x_s^{p1} y_s^{q1} T_s^{r1} P_s^{s1} +$$
$$A_2 k_s^{n2} c_{ps}^{m2} x_s^{p2} y_s^{q2} T_s^{r2} P_s^{s2} + \dots$$

$$= \Sigma_i A_i k_s^{ni} c_{ps}^{mi} x_s^{pi} T_s^{ri} P_s^{si}$$

where Ys represents a thermophysical or thermochemical parameter of interest selected from any of the higher heating value, H; oxygen demand, D; Wobbe Index, Wo; relative density or specific gravity, $\rho$; absolute density, $\rho_a$ ; inerts, I; compressibility factor, Z; critical compression ratio, $R_c$; viscosity, $\eta$; $A_0$, $A_1$ ... $A_i$ are constants or coefficients, $n_i$, $m_i$, $p_i$, $q_i$, $r_i$, $s_i$ are exponents of values from -20 to 20, including zero, with the number of terms, i, ranging from 1 to 15, $k_s$ and $c_{ps}$ represent their values at a predetermined reference condition of temperature and pressure, $x_s$ represents dk/dT at the reference condition, $Y_s$ represents $dc_p$ /dT at a reference condition, $T_s$ represents temperature at the reference condition, $P_s$ represents absolute pressure at the reference condition.

US 6,561,791 B1 is directed to providing a regulating device for gas burners which avoids the disadvantages of a restricted scope of use, such as a restricted working range or restrictions due to the interaction between low actuating forces and the operating tolerances as a result of disturbing influences, and discloses a regulating system for a gas burner wherein a fuel gas flow and a combustion air flow are guided to the burner. The fuel gas flow is regulated depending on the pressure in the combustion air flow. A differential pressure sensor is arranged between the fuel gas flow and the combustion air flow. The sensor generates an electronic signal that is used to regulate a gas valve for the fuel gas.

WO 2020 148 434 A1 is directed to providing a less complex and yet precise method for regulating a gas mixture in a fuel gas-operated heating device, which is also robust against external influences such as dust and discloses a method for controlling a gas mixture formed from a gas and a fuel gas in a fuel-gas-operated heating device, wherein the gas mixture is created by a gas amount and a fuel gas amount being provided by a first actuator and a second actuator respectively and then mixed; a microthermal gas mixture sensor, which detects at least one material property of the gas mixture, is supplied with the gas mixture and continuously transmits a sensor signal dependent on the particular gas mixture to a control device; the control device compares the detected sensor signal with a set-point value of the sensor signal and, in the event that the detected sensor signal deviates from the set-point sensor signal, actuates at least one of the first and second actuators, as a result of which the gas mixture is adjusted by increasing or reducing the gas amount and/or increasing or reducing the fuel gas amount, until the set-point value of the sensor signal is achieved.

DE202018101271U1 is directed to providing a fuel gas-operated heater in which the type of fuel gas is determined before the heater is started and used for the start process and discloses a fuel gas-operated heater with an electronic gas-air system, the heater having at least one blower for conveying an air volume flow, a gas supply with a gas actuator for the controlled supply of a fuel gas, a burner, an ignition unit for igniting the burner, a sensor arranged in the gas supply and flowed by the fuel gas, and a control device for regulating at least the air volume flow conveyed by the blower and the gas actuator determining a gas mass flow of fuel gas, wherein

a. the sensor is designed as a gas mass sensor for determining the fuel gas mass and a physical property assigned to the fuel gas mass,
b. the physical property of the fuel gas can be measured by the gas mass sensor and transmitted to the control unit,
c. the fuel gas type can be determined by the control device from the measured physical property of the fuel gas;
d. The control device on the gas control element can regulate a first starting gas mass flow depending on the specific fuel gas type, which is below an ignition limit of the fuel gas of the specific fuel gas type,
e. the supplied gas mass flow can be increased with a constant air volume flow, starting from the starting gas mass flow, with ignition attempts by the ignition unit, until an ignition range of the specific fuel gas type is exceeded,
f. during the ignition attempts, ignition of the burner can be monitored and recorded.

EP3683500A1 is directed to providing a method for regulating a gas mixture in a fuel gas-operated heating device which detects changes in the properties of the gas supplied to the fuel gas and adapts control parameters in a targeted manner and discloses a method for regulating a gas mixture formed from a gas and a fuel gas in a fuel gas-operated heating appliance, wherein the gas mixture is created by providing and mixing a gas quantity by way of a first control element and a fuel gas quantity by way of a second control element, wherein a microthermal gas sensor and a gas mixture sensor are used and sensor signals are relayed to a controller, and wherein upon change in the detected sensor signal [of the] gas sensor the newly detected sensor signal of the gas sensor is compared to reference values which have been measured in the laboratory and saved in a table of values in the controller and from this a target value of the sensor signal of the gas mixture sensor is determined without a mixture ratio of the gas mixture composed of fuel gas and gas being changed.

EP2574918B1 is directed to specifying a method for the simple and cost-effective upgrading of suitable gas flow measurement techniques to high-precision gas quality sensors, which parameters relevant to combustion technology such as the calorific value, the Wobbe index, the methane number and / or the air requirement via correlations with the basic properties of heat capacity, Determine the thermal conductivity or density of a gas and discloses a method for determining physical gas properties of gas mixtures for the correlation of combustion-relevant variables of gas mixtures by combining a first sensor for the physical gas property (y), for example the density ($\rho$) or the heat capacity (cp) or the mass or volumetric flow or a combination of these variables, with a microthermal sensor for measuring the complementary variable ($\tilde{\gamma}$) relating to the ratio (vx·($\rho$·cp/$\lambda$)) between flow velocity (vx) and thermal diffusivity ($\lambda$/($\rho$·cp)) of the gas mixture, where $\gamma$·$\tilde{\gamma}$ = vx·($\rho$·cp/$\lambda$), wherein at least the microthermal sensor is subjected to a gas flow and the thermal conductivity ($\lambda$) of the gas mixture is measured separately with the microthermal sensor.

EP 3 825 623 A1, which is a prior art document in the sense of Article 54(3) EPC, discloses a method for operating a heating device for heating a building. The heating device is operated with a primary combustion control. If an implausibility and/or disturbance of the primary combustion control is detected, the heating device is operated with a secondary combustion control. The heating device comprises several sensors, wherein the implausibility can be detected via at least one of the sensors.

WO2019185181A1 is directed to providing a regulation device that is capable of achieving reliable and accurate control of the mixing ratio between a first gas and a second gas over a wide dynamic range of the absolute flow rates of the gases, even in the presence of large differences between their flow rates and discloses a regulating device comprising a first sensor S1 for determining one or more thermal parameters of the gas mixture which sensor is arranged in a common conduit downstream from a mixing region and upstream of fan such that the sensor S1 is exposed to the gas mixture.

A control device receives sensor signals from the first sensor S1. Based on the sensor signals, the control device derives control signals for adjusting the degree of opening of a fuel control valve. The control device further adjusts the electric power with which the fan is operated. Further sensors may be provided in air conduit and/or in the fuel conduit. As an example, a second sensor S2 is provided in air conduit upstream of the mixing region. In addition or in the alternative, a third sensor S3 is provided in the fuel conduit downstream from fuel control valve and upstream of the mixing region. Like the first sensor S1, also second and/or third sensors S2, S3 are advantageously protected from direct exposure to the respective gas flows by disposing each sensor in a dead-ended recess of the wall of the respective conduit, and/or by protecting each sensor by a gas-permeable membrane. The sensor S1 is operated to determine the thermal conductivity Amix, the thermal diffusivity Dmix and the temperature Tmix of the gas mixture in the common conduit downstream from the mixing region. The sensor S2 is operated to determine the thermal conductivity $\lambda$air, the thermal diffusivity Dair and the temperature Tair of the air in air conduit upstream of the mixing region.

The air pressure pair is determined from these quantities. The air pressure pair or the air density as determined from the signals of sensor S2 can be used as an additional diagnostic parameter. In particular, the air pressure pair or the air density can be used to detect blockages or malfunctions of the fan. For instance, the air pressure or density can be permanently or periodically monitored during operation of the regulation device. Changes in air pressure or density during operation of the fan at constant fan power may indicate a blockage or fan malfunction. The determination of the air pressure or density from the signals of sensor S2 is possible during normal operation of the regulation device. The sensor S3 is operated to determine the thermal conductivity λfuel, the thermal diffusivity Dfuel and the temperature Tfuel of the fuel gas in the fuel conduit downstream from the fuel control valve and upstream of the mixing region. The mixing ratio x is determined based on

$$D_{mix} = x \cdot D_{fuel} + (1 - x) \cdot D_{air} \qquad \text{Eq. (3)}$$

using the values of λmix as determined by sensor S1, of λair as determined by sensor S2, and of λfuel as determined by sensor S3. WO2019185181A1 further discloses that it is possible to additionally measure the flow rate of the air flow in the air conduit, of the fuel flow in the fuel conduit, or the flow of the gas mixture in the common conduit, using mass flow meters. In this manner, WO2019185181A1 determines the absolute heating power of the gas mixture delivered to the gas burner. The mass flow rate(s) can be used to control the fan so as to regulate the heating power.

In conventional electronic gas air ration controlled systems a control unit of the gas heater controls the heat load of the gas heater by controlling a gas to fuel gas ratio. The gas to fuel gas ratio can be controlled based on a ionization signal because the flame signal depends on the composition of the mixed gas. Thus, the gas heater can adapt itself internally to the fuel gas family. However, the known gas heaters cannot be used for mixtures of fuel gases containing more than 95 mol% hydrogen. In particular, if the fuel gas is or comprises an amount of hydrogen greater than 95 mol% the ionization signal cannot be used for adapting the mixed gas to a composition that is needed for the burner to provide the requested power. Therefore, the conventional gas adaptive systems require the use of sufficient amounts of natural gas to make use of the ionization signal, such systems are therefore not capable of 95 mol% or more hydrogen combustion.

The object of the invention is to provide a method for operating a gas heater, which can be applied to various types or mixtures of fuel gases. In particular, the gas heater should be gas adaptive to various types or mixtures of fuel gases, including fuel gases comprising hydrogen and should avoid high emissions or worse efficiency due to incorrect mixtures of the gas and the fuel gas. In addition, the method should also avoid that the heater will not start, or will have flashbacks due to incorrect gas air ratios.

The object is solved by a method according to claim 1.

Another object of the invention is to provide a gas heater which can be used for various types or mixtures of fuel gases.

The object is solved by a gas heater according to claim 10.

According to the invention it was recognized that by determining whether at least one operation condition of the gas heater is fulfilled based on the determined gas quantity and/or the determined fuel gas quantity it is possible to adapt the gas to fuel gas ratio in such a way, that the burner can provide the needed power by way of safe operation even in case of high, 95 mol % or higher, hydrogen concentrations in the fuel. In particular, it is possible to provide a mixed gas with a gas to fuel gas ratio that corresponds to a predetermined gas to fuel gas ratio. This is the case when the at least one operation condition or all operation conditions are fulfilled.

The predetermined gas to fuel gas ratio of the mixed gas can be dependent on an operation of the gas heater, in particular the burner. It can be determined in a laboratory and stored in an electric memory of the gas heater. In particular, gas to fuel gas ratios covering all operations of the burner that means from minimal load to maximal load can be stored in the electric memory. The electric memory can be part of the control unit.

Therefore, it is possible in case of high concentrations of hydrogen present in the fuel gas to determine the gas to fuel gas ratio in the mixed gas flowing out the mixing chamber independent of an ionization signal. Thus, the composition of fuel gases that can be used in the gas heater is more versatile than in known embodiments. Additionally, in the inventive embodiment the gas quantity and fuel gas quantity are always known and can always be controlled that is advantageous for security reasons, in particular, if hydrogen is used as fuel gas or as part of the fuel gas.

A further advantage of the invention is that the gas quantity and fuel quantity can be set such that flashbacks are prevented. A flashback occurs when the gas mixture velocity is smaller than the flame speed, the flame will traverse in the upstream direction, which is toward the burner deck and even across the burner deck into the burner.

The fuel gas can be a natural gas, methane, ethylene, propane, butane, coal gas, biogas etc., mixtures of the same, and mixtures of the same additionally comprising hydrogen or hydrogen, in particular pure hydrogen. Pure hydrogen is present if the fuel gas has a at least 98 mol% of hydrogen.

The gas can be air.

The control unit is an electric control unit. Additionally, the control unit is adapted to receive electric sensor signals and to output electric control signals. The control unit can comprise at least one processor and/or a printed circuit board.

The sensors are for example flow sensors. The flow sensor can be sensors that measure the differential pressure. In particular, the sensor can be a mass flow sensor or a volume flow sensor. Additionally, the sensor can be a thermal sensor, a temperature anemometry sensor, an ultrasonic flow sensor, a magnet flow sensor, a Coriolis mass flow sensor and/or an optical sensor. The sensor can be an electrical or electronical sensor.

The mixed gas is the output gas that leaves the mixing chamber. The mixed gas can comprise the gas and the fuel gas. Alternatively, the mixed gas can only consist of gas if no fuel gas is inserted into the mixing chamber.

In order to determine the gas quantity of the gas to be supplied to the mixing chamber the first sensor is arranged upstream of the mixing chamber. The second sensor is also arranged upstream of the mixing chamber. In the following, the terms "downstream" and "upstream" refer to a flow direction of the gas from a fan of the gas heater to the burner or to a flow direction of the fuel gas from a fuel gas valve to the burner.

If the gas is air, the gas source corresponds to the surrounding from which a fan sucks air. The fuel gas can be stored in fuel gas tanks or the gas line or gas grid, or be produced in situ such as by an electrolyzer.

The burner can be a pre-mixed burner. Pre-mixed means, that a mixture of the fuel gas and the gas is supplied to the burner. The combustion system can be an electronic combustion control or a pneumatic combustion controlled system.

The burner can be operated between a minimum load and a full load. The ratio of the full load over the minimum load can be at least 4. A gas to fuel gas ratio of a mixture supplied to the burner can be at low load less than 4, at full load less than 2, for both at a minimum 1.

According to an embodiment of the invention, the gas and the fuel gas are supplied into the mixing chamber after a heat demand is requested. The heat demand can be requested due to a heat need, in particular, if for example hot water is needed in a domestic setting. Additionally, a heating process can be executed when the at least one operation condition, in particular all operation conditions, is fulfilled. A heating process can be to ignite the gas heater or to change the burner power. The term "executing" means that the heating process can be started or that an already started heating process can be continued.

The gas heater can comprise an actuator for setting the gas quantity. The control unit can control the actuator for setting the gas quantity when an operation condition of the gas heater is not fulfilled. The operation condition comprises a check whether the determined gas quantity corresponds to the predetermined gas quantity. As mentioned above the predetermined gas quantity depends on the burner operation.

The actuator can optionally be integrated in a fan for sucking the gas or a separate component. The actuator can also act on the fan, in particular, in order to increase or decrease a fan speed for controlling the gas to be supplied into the chamber. The fan can be configured to have a variable fan speed. In particular, the actuator can control the fan speed when the at least one operation condition is not fulfilled. Alternatively, the actuator can be part of a gas valve or act on a gas valve. The control unit can control the flow cross section of the gas valve and, thus, the gas quantity supplied to the mixing chamber.

The first sensor can be arranged upstream or downstream the actuator and/or the gas valve. The first sensor can be arranged in a gas line by means of which the gas is supplied into the mixing chamber. Alternatively, the first sensor can be arranged in a bypass line to the gas line. The provision of the first sensor in the bypass line leads to even more precise measurements compared to the arrangement in the fuel gas line.

Additionally, the gas heater can comprise a further actuator for setting the fuel gas quantity. The further actuator can be integrated in a fuel gas valve or can be a separate component. The further actuator can be configured to act on a fuel gas valve in order to control the fuel gas to be supplied to the mixing chamber. In particular, the further actuator can control the fuel gas valve when a further operation condition is not fulfilled. The control unit can control the further actuator for setting the fuel gas quantity when a further operation condition of the gas heater is not fulfilled. The further operation condition comprises a check whether the determined fuel gas quantity corresponds to a predetermined fuel gas quantity. The determination whether the further operation condition is fulfilled is done after the determination whether the operation condition is fulfilled. In particular, the determination of the further operation condition is only done when the operation condition is fulfilled.

If the heating process is to ignite the gas heater, in particular, the burner, the control unit can control the further actuator based on a check whether the fuel gas quantity profile corresponds to a predetermined ignition ramp. The ignition ramp is a predetermined fuel gas profile that has to be present so that the burner can ignite. The further actuator can be a fuel gas valve or act on a fuel gas valve. The second sensor can be arranged upstream or downstream the further actuator or the fuel gas valve. The second sensor can be arranged in a fuel gas line by means of which the fuel gas is supplied into the mixing chamber. Alternatively, the second sensor can be arranged in a bypass line to the fuel gas line. The provision of the second sensor in the bypass line leads to even more precise measurements compared to the arrangement in the fuel gas line.

The ignition ramp can be determined in laboratory and can match the setting for the gas and the gas fuel in order to have the right ignition in all environmental conditions. In the laboratory two burner behaviors of ignition are tested at extreme conditions. A cold system start occurs when the temperature is below 10 degrees C and hot system start occurs when the temperature is more than 25 or 30 degrees C. Additionally, the burner can also be tested at a climatic chamber condition in which the temperature is below -40 degrees C.

The ignition ramp can be determined based on these tests and on a noise of ignition. A requirement is that the ignition has to occur without noise so that the air to gas ratio is adjusted to comply with the setting that ensures a noiseless ignition.

Additionally, the flue duct length can also have an influence on the ignition ramp. This results as the ignition is adjusted to length of the flue duct as the pressure loss increases with longer flue duct. Further, the ignition ramp can be adjusted that the heat input is minimal.

The control unit can send a control signal to the actuator when the determined gas quantity does not correspond with the predetermined gas quantity. This is the case when the gas to fuel gas ratio of the mixed gas does not suit for the intended operation of the burner so that the gas to fuel gas ratio of the mixed gas has to be adapted.

Based on the received control signal the actuator increases or decreases the flow cross-section of the gas valve through which the gas flows that is supplied to the mixing chamber. At the end the gas quantity can be easily controlled by the actuator.

The control unit can cause to close the fuel gas valve when the determined fuel gas quantity does not correspond with the predetermined fuel gas quantity, in particular if the fuel gas quantity profile does not correspond with the predetermined ignition ramp. This is necessary due to security reasons. In particular, the presence of an explosive gas to fuel gas mixture shall be avoided. The fuel gas valve can be an electronically controlled gas valve.

The gas heater can comprise a third sensor for detecting of a flame signal. The third sensor can be an optical sensor, like a UV sensor, with which it is easily possible to detect whether a flame is present or not, in particular a flame produced by combusting a gas containing 95 mol% hydrogen or more. Alternatively, the third sensor can be a thermocouple with which it is also possible to detect the presence of the flame. The third sensor can be arranged in the burner. Alternatively, the third sensor can be arranged in a combustion chamber in which at least a part of the burner is located.

The control unit can determine whether another operation condition is fulfilled. This can be done after the further operation condition is fulfilled. That means, the flame signal detection can be made when the determined fuel gas quantity corresponds to a predetermined fuel gas quantity. The other operation condition comprises the check whether a flame signal is present. The fuel gas valve can be closed if no flame signal is detected.

Furthermore, the gas heater can comprise a temperature sensor for measuring the temperature in a combustion chamber and/or in a burner of the gas heater and/or in a flue gas pipe of the gas heater. The control unit can determine whether an additional operation condition is fulfilled when the other condition is fulfilled. That means, the determination occurs when a flame signal is detected. The control unit can check whether the measured temperature in the combustion chamber corresponds to a predetermined temperature or if a determined temperature increase in the combustion chamber is above a predetermined threshold. If this is the case, the additional operation condition is fulfilled. If this is not the case, the heating process is aborted or adapted.

The gas quantity can be determined after a fan has started to supply gas to the mixing chamber.

The fuel gas quantity can be determined after a fuel gas valve is opened. Thus, it is not necessary to constantly measure the gas quantity and/or the fuel gas quantity but only when there is a need to measure.

Additionally, the fuel gas quantity is determined after the gas quantity is determined. The fuel gas quantity can be determined when the determined gas quantity corresponds to the predetermined gas quantity. Thus, the risk of occurrence of explosive mixtures can be reduced.

According to an embodiment the fan speed can be used for a check to verify whether the gas heater works properly. In particular, the control unit can be adapted to check whether a fan speed corresponds to a predetermined fan speed assigned to the determined gas quantity or lies in a predetermined fan speed range assigned to the determined gas quantity.

Such an operation enables in an easy way to check whether the first sensor works well. In particular, considering the fan speed verifies the plausibility of the determination of the gas quantity. For the case that the first sensor does not work well, the fan speed does not correspond to the predetermined fan speed or is outside the predetermined fan speed range.

Thus, if e.g. during the ignition phase the fan speed does not correspond with the predetermined fan speed or is outside the predetermined fan speed range the boiler stops. The boiler also stops when the determined fuel gas does not correspond with the predetermined fuel gas quantity, in particular when the determined fuel gas profile does not correspond with the predetermined ignition ramp.

The heating process can be executed when the fan speed corresponds to a predetermined fan speed assigned to the determined gas quantity or lies in a predetermined fan speed range assigned to the determined gas quantity and when the at least one condition is fulfilled. Otherwise, the heating process can be aborted.

In particular, the control unit can have at least one set gas flow rate in terms of differential pressure, in particular in the form of a parameter curve, which refers to a heating process, e.g. an ignition process. The gas flow rate can be dependent on the power of the boiler.

For the boiler at least one parameter curve is stored in the control unit. The parameter curve shows the gas flow rate being between 0% to 100% of the mixture provided to the burner in dependency of the burner power. The set gas flow rates are pre-determined e.g. in a laboratory. The differential pressure is linked to an expected fan speed in revolutions per minute (rpm). If the measured differential pressure and the measured rpm is in the predetermined range the heating process continues. So the measures the pressure differential and rpm are linked and matched.

The control unit is also adapted to check whether an electric signal provided to the fuel gas valve corresponds to an electric signal assigned to the predetermined fuel gas quantity or lies in a predetermined electric signal range assigned to the predetermined fuel gas quantity. This enables to check whether the second sensor works well and, thus, prevents a situation in which e.g. the fuel gas quantity supplied to the mixing chamber is much higher than the determined fuel gas quantity. In particular, considering the electric signal verifies the plausibility of the determination of the fuel gas quantity.

The heating process can be executed when the electric signal provided to a fuel gas valve corresponds to an electric signal assigned to the predetermined fuel gas quantity or lies in a predetermined electric signal range assigned to the predetermined fuel gas quantity and when the at least one condition is fulfilled. Otherwise, the heating process can be aborted.

The control unit can have at least one set fuel gas flow rate, in particular in the form of a parameter curve, in terms of differential pressure which refers to a heating process, e.g. an ignition process. The set fuel gas flow rates are predetermined e.g. in a laboratory. The fuel gas flow rate can be dependent on the power of the boiler. For the boiler at least one parameter curve is stored in the control unit. The parameter curve shows the fuel gas flow rate being between 0% to 100% of the mixture provided to the burner in dependency of the burner power. The differential pressure is linked to an expected electric signal provided to the fuel gas valve. If the measured differential pressure and the measured electrical signal is in the predetermined range the heating process continues. So the measures delta pressure and electrical signal are linked and matched.

In both cases the sensor signal is used to have a verification that the system works properly.

According to an embodiment of the invention the first sensor can be a flow sensor, in particular a mass flow sensor and/or the second sensor can be a flow sensor, in particular a mass flow sensor. The flow sensor, in particular the mass flow sensors measure a differential pressure, respectively. The gas quantity and the fuel gas quantity are determined on the bases of the measured differential pressure, respectively. Thus, the control unit can check whether the measured differential pressure corresponds to a predetermined differential pressure by determining whether the operation condition and/or the further operation condition is fulfilled. Alternatively, the first sensor can be a volume flow sensor and/or the second sensor can be a volume flow sensor.

In an embodiment, the gas heater is configured to use gaseous fuel which comprises 10 mol % to 100 mol %, in particular, 50 mol % to 100 mol %, preferably 95 mol% to 100 mol% , more preferably 95 mol% to 98 mol%, hydrogen. The gas heater according to the invention is not limited to use gaseous fuels comprising hydrogen. Any kind of fuel gas can be used as fuel, e.g. natural gas, methane, ethylene, propane, butane, coal gas, biogas etc. mixtures of the same, and mixtures of the same additionally comprising hydrogen or hydrogen, in particular pure (at least 98 mol %) hydrogen. In this embodiment the gaseous fuel also comprises hydrogen, preferably 95 mol % of hydrogen or more. However, any combination of hydrogen with e.g. natural gas can be used.

The gas heater can be used in a boiler or can be a boiler. The boiler comprises a combustion chamber and a heat exchanger by means of which the heat generated by the burner of the gas heater can be transferred to water. The burner of the gas heater is at least partly arranged within the combustion chamber. The boiler can be a condensing boiler. A condensing boiler achieves high energy efficiency by condensing water vapor in the exhaust gas, thereby recovering latent heat of vaporization. This has the added advantage that compared to a non-condensing boiler, condensing boilers use less fuel and power while producing fewer CO2 emissions.

The boiler and/or gas heater can have a communication means for communicating with a communication apparatus, in particular a server. The communication can be established via data line or wirelessly. The boiler and/or gas heater can be configured that they can be remotely controlled. The control is for example possible by means of an application that is installed on a mobile device or a computer. This simplifies the control and/or maintenance of the boiler and/or gas heater.

According to an advantageous embodiment a heating system is provided. The heating system can comprise a fuel cell and/or a heat pump, preferably a gas absorption heat pump, and/or at least one photo-voltaic (PV) module. The PV module can be used to heat the fluid that e.g. is recirculating in a circuit of the heat pump.

Additionally, an advantageous embodiment is a computer program product comprising instructions which, when the program is executed by a control unit, cause the control unit to perform the inventive method. Furthermore, a data carrier is provide on which the computer program is stored and/or data carrier signal is provided which transmits the computer program.

In the figures, the subject-matter of the invention is schematically shown, wherein identical or similarly acting elements are usually provided with the same reference signs.

Fig. 1    a schematic view of a gas heater,
Fig. 2    a schematic view of a part of the gas heater shown in fig. 1,
Fig. 3    a flowchart of an ignition process of the gas heater,

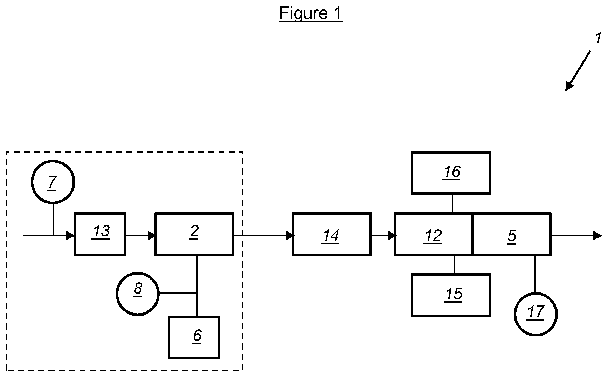

A gas heater 1 shown in fig. 1 comprises a mixing chamber 2 in which gas and fuel gas are mixed. A mixed gas leaves the mixing chamber 2 and is supplied to a burner 12 of the gas heater 1. Additionally, the gas heater 1 comprises a fan 13 arranged upstream of the mixing chamber 2 and that is used for sucking gas, in particular ambient air. A first sensor 7 is provided upstream the fan 13 and is used to determine the gas quantity. However, the first sensor 7 can also be provided downstream the fan 13 (not shown). Thus, the first sensor 7 senses the gas quantity of the gas before the gas flows into the mixing chamber 2.

The gas heater 1 comprises a fuel gas valve 6. The fuel gas valve 6 controls the fuel gas flow into the mixing chamber 2. A second sensor 8 is arranged downstream of the fuel gas valve 6 and is arranged upstream of the mixing chamber 2. The second sensor 8 determines the fuel gas quantity before the fuel gas flows into the mixing chamber 2. The fuel gas is stored in a fuel gas tank that is not shown in the figures.

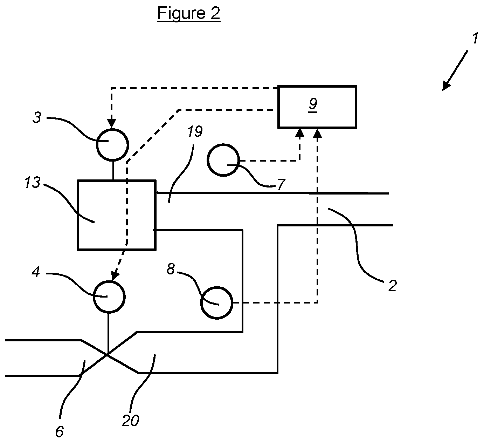

The gas heater 1 also comprises a control unit 9 that is shown in fig. 2. The control unit 9 is adapted to determine whether at least one operation condition of the gas heater 1 is fulfilled based on the determined gas quantity and/or the determined fuel gas quantity

The gas heater 1 comprises a manifold 14 that is arranged downstream the mixing chamber 2 and upstream of the burner 12. The manifold 14 is used to provide the burner 12 with the mixed gas. Even though it is not shown in detail, the burner 12 is partly arranged in a combustion chamber 5. The combustion chamber 5 can be part of a boiler that also comprises a heat exchanger that is not shown in the figures. The heat exchanged is used to exchange heat between the combustion chamber and water in order to heat up the water. The flue gas leaves the combustion chamber 5 as it is shown by an arrow.

The gas heater 1 comprises an ignition electrode 15 that is used to ignite the burner 12. In particular, the mixed gas supplied to the burner 12 is ignited. After ignition the burner 12 heats up the combustion chamber 5.

A third sensor 16, in particular a detector, of the gas heater 1 is used to detect a burner flame. In particular, the third sensor 16 detects whether a flame is present or not. A temperature sensor 17 of the gas heater 1 is used to measure the temperature which can be located in the burner and/or in the combustion chamber 5, wherein the burner is preferred. Additionally, the gas heater 1 can comprise a fourth sensor in order to measure one or more properties of the gas mixture (not shown). The composition of the mixed gas can be determined based on sensor signals provided by the fourth sensor.

Fig. 2 shows a schematic overview of a part of the gas heater 1 shown in fig. 1. In particular, fig. 2 shows the part of the gas heater 1 of fig. 1 which is arranged within the dotted rectangular wherein the first and second sensor 7, 8 are shown merely to illustrate that they are electrically connected with the control unit 9. The location of the first and second sensor 7, 8 is shown in figure 1. As is evident from fig. 2 the gas heater 1 comprises an actuator 3 and a further actuator 4. The actuator 3 is used to control the fan 3, in particular the fan speed, in order to set the gas quantity in a gas line 19.

The actuator 3 and the fan 13 are two separate components arranged at a distance from each other. In an alternative non-shown embodiment the actuator 3 can be integrated in the fan 13. The further actuator 4 and the fuel gas valve 6 are two separate components arranged at a distance from each other. In an alternative non-shown embodiment the further actuator 4 can be integrated in the fuel gas valve 6.

The gas line 19 is fluidically connected with the mixing chamber 2 at one end. At another end the gas line 19 is fluidically connected with the fan 13 shown in fig. 1. The further actuator 4 is used to control the fluid gas valve 6 in order to set the fuel gas quantity in a fuel gas line 20. The fuel gas line 20 is fluidically connected with the mixing chamber 2 at an end. At another end the fuel gas line 20 is fluidically connected with the non-shown fuel gas tank.

The first sensor 7 is arranged upstream the fan 13 as is shown in fig. 1 and the second sensor 8 is arranged downstream the fuel gas valve 6. Both sensors 7, 8 are arranged upstream the mixing chamber 2. In a non-shown alternative embodiment the sensor 7 can be arranged downstream the fan 13. As can be gathered from fig. 2 both sensors 7, 8 and both actuators 3, 4 are electrically connected to the control unit 9 as is shown by the dotted lines. The control unit 9 determines whether at least one condition, in particular several conditions, are fulfilled based on the determined gas quantity and the determined fuel gas determined. The control unit 9 controls the actuator 3 and the further actuator 4 based on the determination result as is shown by the dotted lines.

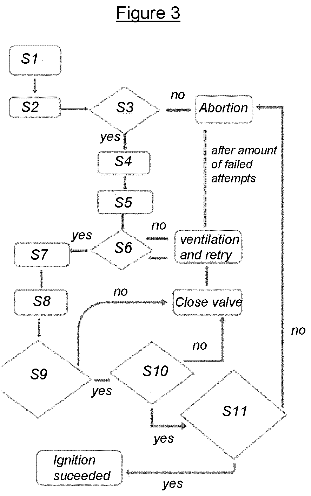

Fig. 3 shows a flowchart of a heating process of the gas heater 1. The heating process is in this case an ignition process. However, the operation of the gas heater 1 according to inventive method is not limited to the ignition process of the burner 12.

In a first step S1 a heating process is initiated. Thereto, the control unit 9 receives a heating request. Afterwards, in a second step S2 the control unit 9 performs a sensor signal control and verifies in a third step S3 whether the sensors work and/or are in an operating mode. If the verification has not been successful, the heating process is aborted.

If in the third step S3 the verification has been successful, the fan 13 is started in a fourth step S4. After the fan is started, in a fifth step S5 the first sensor 7 starts to determine the gas quantity and sends the sensor signals to the control unit 9. In a sixth step S6 the control unit 9 checks whether an operation condition of the gas heater 1 is fulfilled. In particular, the control unit 9 checks whether the determined gas quantity corresponds to a predetermined gas quantity. Thereto the control unit 9 checks whether the measured difference pressure corresponds to a predetermined difference pressure. The predetermined gas quality depends on the power that the burner 12 has to provide.

If the determined gas quantity does not correspond with a predetermined gas quantity, the control unit 9 sends a control signal to the actuator 3 and the steps S5 and S6 are repeated. The mixing chamber 2 can be post-ventilated before the control signal is sent to the actuator 3. If the determined gas quantity does not correspond with a predetermined gas quantity after a predetermined amount of trials, the heating process is aborted.

However, if the control unit 9 determines in the sixth step S6 that the determined gas quantity corresponds to the predetermined gas quantity, the ignition electrode 15 is sparked in a seventh step S7. Afterwards, in an eighth step S8 the fuel gas valve is opened and the second sensor 8 starts to determine the fuel gas quantity.

In a ninth step S9 the control unit 9 determines whether a further operation condition is fulfilled. In particular, the control unit 9 checks whether the determined fuel gas quantity corresponds to a predetermined fuel gas quantity. Specifically, the control unit 9 checks whether a determined ignition ramp corresponds to a predetermined ignition ramp. If this is the case, the heating process is continued in a tenth step S10.

In the tenth step S10 the control unit 9 determines whether another operation condition is fulfilled. In particular, the control unit 9 determines whether a flame is present. If the third sensor 16 detects that a flame is present, the temperate sensor 17 measures a temperature in the combustion chamber 5 in an eleventh step S11. Additionally, the control unit 9 determines in the eleventh step S11 whether an additional operation condition is fulfilled. In particular, the control unit 9 checks if the measured temperature is above a threshold. If this is the case, the heating process is successfully finished.

If in the nineth step S9 the control unit 9 determines that the determined fuel gas quantity does not corresponds to a predetermined fuel gas quantity and/or the measured ignition ramp does not correspond with a predetermined ignition ramp, the fuel gas valve 6 is closed. Likewise, the fuel gas valve 6 is closed if in the tenth step S10 no flame is detected by the third sensor 16. In both cases the mixing chamber 2 is post-ventilated and the process steps S7 to S10 are repeated. However, as mentioned above for the process step S5 and S6 the process steps S7 to S10 are only repeated for a predetermined amount of trials. If the aforementioned further, other and additional conditions are not fulfilled within said predetermined amount of trials, the heating process is aborted.

If in the eleventh step S11 the control unit 9 determines that the temperature is below the threshold, the heating process is aborted.

### Reference signs:

| | |
|---|---|
| 1 | gas heater |
| 2 | mixing chamber |
| 3 | actuator |
| 4 | further actuator |
| 5 | combustion chamber |
| 6 | fuel gas valve |
| 7 | first sensor |
| 8 | second sensor |
| 9 | control unit |
| 12 | burner |
| 13 | fan |
| 14 | manifold |
| 15 | ignition electrode |
| 16 | third sensor |
| 17 | temperature sensor |
| 19 | gas line |
| 20 | fuel gas line |

S1-S11    first to eleventh step

### Claims

1. Method for operating a gas heater (1), in particular a gas heater for providing central heating and/or for providing domestic hot water, in particular a gas boiler, in particular a condensing boiler, wherein the method comprises the following steps:

   supplying a gas and a fuel gas into a mixing chamber (2) of the gas heater (1) and supplying a mixed gas from the mixing chamber (2) to a burner (12) of the gas heater (1),

measure the differential pressure per unit time and/or provide a sensor signal to a control unit (9) for determining a gas quantity, defined by a volume per unit time or a mass per unit time, before the gas is supplied to the mixing chamber (2),

measure the differential pressure per unit time and/or provide a sensor signal to the control unit for determining a fuel gas quantity, defined by a volume per unit time or a mass per unit time, before the fuel gas is supplied to the mixing chamber (2) and

determining whether one operation condition of the gas heater (1) is fulfilled based on the determined gas quantity wherein the operation condition comprises a check whether the determined gas quantity corresponds to the predetermined gas quantity and

determining whether a further operation condition of the gas heater (1) is fulfilled based on the determined fuel gas quantity wherein the further operation condition comprises a check whether the determined fuel gas quantity corresponds to a predetermined fuel gas quantity wherein

the determination of the further operation condition is done when the operation condition is fulfilled.

2. Method according to claim 1, **characterized in that**

    a. an actuator (3) for setting the gas quantity is controlled when the at least one operation condition is not fulfilled and/or **in that**

    b. an actuator (3) for setting the gas quantity is controlled based on a check whether the determined gas quantity corresponds to a predetermined gas quantity and/or in that

    c. an actuator (3) controls a fan speed for controlling the gas to be supplied to a chamber of the gas heater (1) when the at least one operation condition is not fulfilled.

3. Method according to claim 2, **characterized in that** a control signal is sent to the actuator (3) when the determined gas quantity does not correspond to the predetermined gas quantity.

4. Method according to one of the claims 1 to 3, **characterized in that**

    a. a further actuator (4) for setting the fuel gas quantity is controlled when a further operation condition is not fulfilled and/or **in that**

    b. a further actuator (4) for setting the fuel gas quantity is controlled based on a check whether the determined fuel gas quantity corresponds to a predetermined fuel gas quantity, in particular whether the fuel gas quantity profile corresponds to a predetermined ignition ramp and/or **in that**

    c. a further actuator (4) controls a fuel gas valve (6) when a further operation condition is not fulfilled.

5. Method according to one of the claims 1 to 4, **characterized in that**

    a. it is determined whether another operation condition is fulfilled, wherein the other condition comprises the check whether a flame signal is present and/or **in that**

    b. it is determined whether another operation condition is fulfilled when the determined fuel gas quantity corresponds to a predetermined fuel gas quantity.

6. Method according to claim 4 or 5, **characterized in that** a fuel gas valve (6) is closed when

    a. the determined fuel gas quantity does not correspond with a predetermined fuel gas quantity, in particular when the fuel gas quantity profile does not correspond with a predetermined ignition ramp, and/or if

    b. no flame signal is detected.

7. Method according to one of the claims 1 to 6, **characterized in that**

    a. it is determined whether an additional operation condition is fulfilled wherein the additional operation condition comprises the check whether a measured temperature of a combustion chamber (5) of the gas heater (1) or a determined temperature increase in the combustion chamber (5) is above a predetermined threshold and/or **in that**

    b. the gas quantity is determined after a fan (13) has started to supply gas to the mixing chamber (2) and/or **in that**

    c. the fuel gas quantity is determined after a fuel gas valve (6) is opened and/or **in that**

    d. the fuel gas quantity is determined after the gas quantity is determined and/or **in that**

    e. the fuel gas quantity is determined when the determined gas quantity corresponds to a predetermined gas quantity.

8. Method according to claims 1 to 7, **characterized in that**

   a. it is checked whether a fan speed corresponds to a predetermined fan speed assigned to the determined gas quantity or lies in a predetermined fan speed range assigned to the determined gas quantity and/or **in that**
   b. it is checked whether an electric signal provided to a fuel gas valve (6) corresponds to an electric signal assigned to the predetermined fuel gas quantity or lies in a predetermined electric signal range assigned to the predetermined fuel gas quantity.

9. Method according to claim 8, **characterized in that**

   a. the heating process is executed when the fan speed corresponds to a predetermined fan speed assigned to the determined gas quantity or lies in a predetermined fan speed range assigned to the determined gas quantity and when the at least one condition is fulfilled and/or **in that**
   b. the heating process is executed when the electric signal provided to a fuel gas valve (6) corresponds to an electric signal assigned to the predetermined fuel gas quantity or lies in a predetermined electric signal range assigned to the predetermined fuel gas quantity and when the at least one condition is fulfilled.

10. Gas heater (1) comprising a mixing chamber (2) for mixing gas and fuel gas, a burner (12) that is arranged downstream the mixing chamber (2) and to which a mixed gas of the mixing chamber (2) can be supplied, a first sensor (7) for measuring the differential pressure per unit time and/or for providing a sensor signal to a control unit (9) for determining the gas quantity, defined by a volume per unit or a mass per unit time, of the gas to be supplied into the mixing chamber and a second sensor (8) for measuring the differential pressure per unit time and/or for providing a sensor signal to the control unit (9) for determining the fuel gas quantity, defined by a volume per unit time or a mass per unit time, of the fuel gas to be supplied into the mixing chamber (2), wherein

    the control unit (9) is adapted to determine whether one operation condition of the gas heater (1) is fulfilled based on the determined gas quantity wherein the operation condition comprises a check whether the determined gas quantity corresponds to the predetermined gas quantity and
    the control unit (9) is adapted to determine whether one further operation condition of the gas heater (1) is fulfilled based on the determined fuel gas quantity wherein the further operation condition comprises a check whether the determined fuel gas quantity corresponds to a predetermined fuel gas quantity and wherein
    the determination of the further operation condition is done when the operation condition is fulfilled.

11. Gas heater (1) according to claim 10, **characterized in that**

    a. the gas heater (1) comprises a temperature sensor (17) for measuring the temperature in a combustion chamber (5) and/or burner (12) and/or **in that**.
    b. the control unit (9) is adapted to check whether a fan speed corresponds to a predetermined fan speed assigned to the determined gas quantity or lies in a predetermined fan speed range assigned to the determined gas quantity and/or **in that**
    c. the control unit (9) is adapted to check whether an electric signal provided to the fuel gas valve (6) corresponds to an electric signal assigned to the predetermined fuel gas quantity or lies in a predetermined electric signal range assigned to the predetermined fuel gas quantity and/or **in that**
    d. the gas heater (2) is configured to use fuel gas which comprises at least 10 mol %, in particular at least 95 mol %, hydrogen.

12. Boiler, in particular a condensing boiler, for heating a liquid, in particular water, **characterized in that** the boiler comprises a gas heater (2) according to claim 11, a heat exchanger with a combustion chamber, wherein the burner (12) of the gas heater (1) is at least partly arranged within the combustion chamber.

13. Heating system comprising a gas heater according to claim 10 or 11 or a boiler according to claim 12 and further comprising a fuel cell and/or a heat pump, preferably a gas absorption heat pump, and/or at least one photo-voltaic (PV) module.

14. Use of a gas heater according to claim 10 or 11 or a boiler according to claim 12 in hydrogen or hydrogen containing fuel gas heating applications or natural gas heating applications.

**15.** Computer program product comprising instructions which, when the program is executed by a control unit, cause the control unit to perform the method according to one of the claims 1 to 9.

**Patentansprüche**

**1.** Verfahren zum Betrieb einer Gasheizung (1), insbesondere einer Gasheizung zum Bereitstellen von Zentralheizung und/oder zum Bereitstellen von Haushaltswarmwasser, insbesondere eines Gaskessels, insbesondere eines Brennwertkessels, wobei das Verfahren die folgenden Schritte umfasst:

Zuführen eines Gases und eines Heizgases in eine Mischkammer (2) der Gasheizung (1) und Zuführen eines Mischgases aus der Mischkammer (2) zu einem Brenner (12) der Gasheizung (1),
Messen des Differenzdrucks pro Zeiteinheit und/oder Bereitstellen eines Sensorsignals für eine Steuereinheit (9) zum Ermitteln einer Gasmenge, die durch ein Volumen pro Zeiteinheit oder eine Masse pro Zeiteinheit definiert ist, bevor das Gas der Mischkammer (2) zugeführt wird,
Messen des Differenzdrucks pro Zeiteinheit und/oder Bereitstellen eines Sensorsignals für die Steuereinheit zum Ermitteln einer Heizgasmenge, die durch ein Volumen pro Zeiteinheit oder eine Masse pro Zeiteinheit definiert ist, bevor das Heizgas der Mischkammer (2) zugeführt wird, und
Ermitteln, ob eine Betriebsbedingung der Gasheizung (1) auf der Grundlage der ermittelten Gasmenge erfüllt ist, wobei die Betriebsbedingung eine Überprüfung umfasst, ob die ermittelte Gasmenge der vorgegebenen Gasmenge entspricht, und
Ermitteln, ob eine weitere Betriebsbedingung der Gasheizung (1) auf der Grundlage der ermittelten Heizgasmenge erfüllt ist, wobei die weitere Betriebsbedingung eine Überprüfung umfasst, ob die ermittelte Heizgasmenge einer vorgegebenen Heizgasmenge entspricht, wobei
die Ermittlung der weiteren Betriebsbedingung erfolgt, wenn die Betriebsbedingung erfüllt ist.

**2.** Verfahren nach Anspruch 1, **dadurch gekennzeichnet, dass**

a. ein Stellglied (3) zum Einstellen der Gasmenge gesteuert wird, wenn die mindestens eine Betriebsbedingung nicht erfüllt ist, und/oder dadurch, dass
b. ein Stellglied (3) zum Einstellen der Gasmenge auf der Grundlage einer Überprüfung gesteuert wird, ob die ermittelte Gasmenge einer vorgegebenen Gasmenge entspricht, und/oder dadurch, dass
c. ein Stellglied (3) eine Gebläsedrehzahl steuert, um das einer Kammer der Gasheizung (1) zuzuführende Gas zu regeln, wenn die mindestens eine Betriebsbedingung nicht erfüllt ist.

**3.** Verfahren nach Anspruch 2, **dadurch gekennzeichnet, dass** ein Steuersignal an das Stellglied (3) gesendet wird, wenn die ermittelte Gasmenge nicht der vorgegebenen Gasmenge entspricht.

**4.** Verfahren nach einem der Ansprüche 1 bis 3, **dadurch gekennzeichnet, dass**

a. ein weiteres Stellglied (4) zum Einstellen der Gasmenge gesteuert wird, wenn eine weitere Betriebsbedingung nicht erfüllt ist, und/oder dadurch, dass
b. ein weiteres Stellglied (4) zum Einstellen der Heizgasmenge auf der Grundlage einer Überprüfung gesteuert wird, ob die ermittelte Heizgasmenge einer vorgegebenen Heizgasmenge entspricht, insbesondere ob das Heizgasmengenprofil einer vorgegebenen Zündrampe entspricht, und/oder dadurch, dass
c. ein weiteres Stellglied (4) ein Heizgasventil (6) steuert, wenn eine weitere Betriebsbedingung nicht erfüllt ist.

**5.** Verfahren nach einem der Ansprüche 1 bis 4, **dadurch gekennzeichnet, dass**

a. ermittelt wird, ob eine weitere Betriebsbedingung erfüllt ist, wobei die weitere Bedingung die Überprüfung umfasst, ob ein Flammensignal vorhanden ist, und/oder dadurch, dass
b. ermittelt wird, ob eine weitere Betriebsbedingung erfüllt ist, wenn die ermittelte Heizgasmenge einer vorgegebenen Heizgasmenge entspricht.

**6.** Verfahren nach Anspruch 4 oder 5, **dadurch gekennzeichnet, dass** ein Heizgasventil (6) geschlossen wird, wenn

a. die ermittelte Heizgasmenge nicht einer vorgegebenen Heizgasmenge entspricht, insbesondere wenn des Heizgasmengenprofil nicht einer vorgegebenen Zündrampe entspricht, und/oder wenn

b. kein Flammensignal erkannt wird.

7. Verfahren nach einem der Ansprüche 1 bis 6, **dadurch gekennzeichnet, dass**

a. ermittelt wird, ob eine zusätzliche Betriebsbedingung erfüllt ist, wobei die zusätzliche Betriebsbedingung die Überprüfung umfasst, ob eine gemessene Temperatur einer Brennkammer (5) der Gasheizung (1) oder ein ermittelter Temperaturanstieg in der Brennkammer (5) über einem vorgegebenen Schwellenwert liegt, und/oder dadurch, dass
b. die Gasmenge ermittelt wird, nachdem ein Gebläse (13) begonnen hat, der Mischkammer (2) Gas zuzuführen, und/oder dadurch, dass
c. die Heizgasmenge ermittelt wird, nachdem ein Heizgasventil (6) geöffnet wurde, und/oder dadurch, dass
d. die Heizgasmenge ermittelt wird, nachdem die Gasmenge ermittelt wurde, und/oder dadurch, dass
e. die Heizgasmenge ermittelt wird, wenn die ermittelte Gasmenge einer vorgegebenen Gasmenge entspricht.

8. Verfahren nach Anspruch 1 bis 7, **dadurch gekennzeichnet, dass**

a. überprüft wird, ob eine Gebläsedrehzahl einer der ermittelten Gasmenge zugeordneten vorgegebenen Gebläsedrehzahl entspricht oder in einem der ermittelten Gasmenge zugeordneten vorgegebenen Gebläsedrehzahlbereich liegt, und/oder dadurch, dass
b. überprüft wird, ob ein elektrisches Signal, das einem Heizgasventil (6) bereitgestellt wird, einem der vorgegebenen Heizgasmenge zugeordneten elektrischen Signal entspricht oder in einem der vorgegebenen Heizgasmenge zugeordneten vorgegebenen Bereich des elektrischen Signals liegt.

9. Verfahren nach Anspruch 8, **dadurch gekennzeichnet, dass**

a. der Heizprozess ausgeführt wird, wenn die Gebläsedrehzahl einer der ermittelten Gasmenge zugeordneten vorgegebenen Gebläsedrehzahl entspricht oder in einem der ermittelten Gasmenge zugeordneten vorgegebenen Gebläsedrehzahlbereich liegt und wenn die mindestens eine Bedingung erfüllt ist, und/oder dadurch, dass
b. der Heizvorgang ausgeführt wird, wenn das elektrische Signal, das einem Heizgasventil (6) bereitgestellt wird, einem der vorgegebenen Heizgasmenge zugeordneten elektrischen Signal entspricht oder in einem der vorgegebenen Heizgasmenge zugeordneten vorgegebenen Bereich des elektrischen Signals liegt und wenn die mindestens eine Bedingung erfüllt ist.

10. Gasheizung (1), die eine Mischkammer (2) zum Mischen von Gas und Heizgas, einen Brenner (12), der der Mischkammer (2) nachgelagert angeordnet ist, dem ein Mischgas der Mischkammer (2) zugeführt werden kann, einen ersten Sensor (7) zum Messen des Differenzdrucks pro Zeiteinheit und/oder zum Bereitstellen eines Sensorsignals für eine Steuereinheit (9) zum Ermitteln der durch ein Volumen pro Zeiteinheit oder eine Masse pro Zeiteinheit definierten Gasmenge des in die Mischkammer zuzuführenden Gases und einem zweiten Sensor (8) zum Messen des Differenzdrucks pro Zeiteinheit und/oder zum Bereitstellen eines Sensorsignals für die Steuereinheit (9) zum Ermitteln der durch ein Volumen pro Zeiteinheit oder eine Masse pro Zeiteinheit definierten Heizgasmenge des in die Mischkammer (2) zuzuführenden Heizgases umfasst, wobei

die Steuereinheit (9) eingerichtet ist, um auf der Grundlage der ermittelten Gasmenge zu ermitteln, ob eine Betriebsbedingung der Gasheizung (1) erfüllt ist, wobei die Betriebsbedingung eine Überprüfung umfasst, ob die ermittelte Gasmenge der vorgegebenen Gasmenge entspricht, und
die Steuereinheit (9) eingerichtet ist, auf der Grundlage der ermittelten Heizgasmenge zu ermitteln, ob eine weitere Betriebsbedingung der Gasheizung (1) erfüllt ist, wobei die weitere Betriebsbedingung eine Überprüfung umfasst, ob die ermittelte Heizgasmenge einer vorgegebenen Heizgasmenge entspricht, und wobei
die Ermittlung der weiteren Betriebsbedingung erfolgt, wenn die Betriebsbedingung erfüllt ist.

11. Gasheizung (1) nach Anspruch 10, **dadurch gekennzeichnet, dass**

a. die Gasheizung (1) einen Temperatursensor (17) zum Messen der Temperatur in einer Brennkammer (5) und/oder einem Brenner (12) umfasst, und/oder dadurch, dass
b. die Steuereinheit (9) eingerichtet ist, um zu überprüfen, ob eine Gebläsedrehzahl einer der ermittelten Gasmenge zugeordneten vorgegebenen Gebläsedrehzahl entspricht oder in einem der ermittelten Gasmenge zugeordneten vorgegebenen Gebläsedrehzahlbereich liegt, und/oder dadurch, dass
c. die Steuereinheit (9) eingerichtet ist, um zu überprüfen, ob ein dem Heizgasventil (6) bereitgestelltes elektrisches Signal einem der vorgegebenen Heizgasmenge zugeordneten elektrischen Signal entspricht oder in einem der vorgegebenen Heizgasmenge zugeordneten vorgegebenen Bereich des elektrischen Signals liegt, und/oder dadurch, dass

d. die Gasheizung (2) zum Verwenden von Heizgas konfiguriert ist, das mindestens 10 Mol-%, insbesondere mindestens 95 Mol-% Wasserstoff umfasst.

12. Heizkessel, insbesondere ein Brennwertkessel, zum Erwärmen einer Flüssigkeit, insbesondere Wasser, **dadurch gekennzeichnet, dass** der Heizkessel eine Gasheizung (2) nach Anspruch 11, einen Wärmetauscher mit einer Brennkammer umfasst, wobei der Brenner (12) der Gasheizung (1) mindestens teilweise innerhalb der Brennkammer angeordnet ist.

13. Heizsystem, das eine Gasheizung nach Anspruch 10 oder 11 oder einen Heizkessel nach Anspruch 12 umfasst und ferner eine Brennstoffzelle und/oder eine Wärmepumpe, vorzugsweise eine Gasabsorptionswärmepumpe, und/oder mindestens ein Photovoltaikmodul (PV-Modul) umfasst.

14. Verwendung einer Gasheizung nach Anspruch 10 oder 11 oder eines Heizkessels nach Anspruch 12 in Wasserstoffheizgasanwendungen oder in Anwendungen mit wasserstoffhaltigem Heizgas oder in Erdgasheizanwendungen.

15. Computerprogrammprodukt, das Anweisungen umfasst, die, wenn das Programm durch eine Steuereinheit ausgeführt wird, die Steuereinheit veranlassen, das Verfahren nach einem der Ansprüche 1 bis 9 durchzuführen.

**Revendications**

1. Procédé de fonctionnement d'un chauffage au gaz (1), en particulier d'un chauffage au gaz destiné au chauffage central et/ou à la production d'eau chaude sanitaire, en particulier d'une chaudière à gaz, en particulier d'une chaudière à condensation, dans lequel le procédé comprend les étapes suivantes :

l'apport d'un gaz et d'un gaz combustible dans une chambre de mélange (2) du chauffage au gaz (1) et l'apport d'un gaz mixte, de la chambre de mélange (2) à un brûleur (12) du chauffage au gaz (1),
la mesure de la pression différentielle par unité de temps et/ou la fourniture d'un signal de capteur à une unité de commande (9) pour déterminer une quantité de gaz, définie par un volume par unité de temps ou une masse par unité de temps, avant que le gaz ne soit apporté à la chambre de mélange (2),
la mesure de la pression différentielle par unité de temps et/ou la fourniture d'un signal de capteur à l'unité de commande pour déterminer une quantité de gaz combustible, définie par un volume par unité de temps ou une masse par unité de temps, avant que le gaz combustible ne soit apporté à la chambre de mélange (2) et
la détermination du fait qu'une condition de fonctionnement du chauffage au gaz (1) est remplie ou non en fonction de la quantité de gaz déterminée, dans lequel la condition de fonctionnement comprend une vérification indiquant si la quantité de gaz déterminée correspond à la quantité de gaz prédéterminée et
la détermination du fait qu'une autre condition de fonctionnement du chauffage au gaz (1) est remplie ou non sur la base de la quantité de gaz combustible déterminée, dans lequel la condition de fonctionnement ultérieure comprend une vérification indiquant si la quantité de gaz combustible déterminée correspond à une quantité de gaz combustible prédéterminée, dans lequel
la détermination de la condition de fonctionnement ultérieure est effectuée lorsque la condition de fonctionnement est remplie.

2. Procédé selon la revendication 1, **caractérisé en ce que**

a. un actionneur (3) permettant de régler la quantité de gaz est commandé lorsque l'au moins une condition de fonctionnement n'est pas remplie et/ou **en ce que**
b. un actionneur (3) pour régler la quantité de gaz est commandé sur la base d'une vérification indiquant si la quantité de gaz déterminée correspond à une quantité de gaz prédéterminée et/ou **en ce que**
c. un actionneur (3) commande une vitesse de ventilateur pour commander le gaz à apporter à une chambre du chauffage au gaz (1) lorsque l'au moins une condition de fonctionnement n'est pas remplie.

3. Procédé selon la revendication 2, **caractérisé en ce qu'**un signal de commande est envoyé à l'actionneur (3) lorsque la quantité de gaz déterminée ne correspond pas à la quantité de gaz prédéterminée.

**4.** Procédé selon l'une des revendications 1 à 3, **caractérisé en ce que**

a. un actionneur (4) ultérieur permettant de régler la quantité de gaz combustible est commandé lorsqu'une condition de fonctionnement ultérieure n'est pas remplie et/ou **en ce que**
b. un actionneur (4) ultérieur permettant de régler la quantité de gaz combustible est commandé sur la base d'une vérification indiquant si la quantité de gaz combustible déterminée correspond à une quantité de gaz combustible prédéterminée, en particulier si le profil de quantité de gaz combustible correspond à une rampe d'allumage prédéterminée et/ou **en ce que**
c. un actionneur (4) ultérieur commande une vanne de gaz combustible (6) lorsqu'une condition de fonctionnement ultérieure n'est pas remplie.

**5.** Procédé selon l'une des revendications 1 à 4, **caractérisé en ce que**

a. l'on détermine si une autre condition de fonctionnement est remplie, dans lequel l'autre condition comprend la vérification de la présence ou non d'un signal de flamme et/ou **en ce que**
b. l'on détermine si une autre condition de fonctionnement est remplie lorsque la quantité de gaz combustible déterminée correspond à une quantité de gaz combustible prédéterminée.

**6.** Procédé selon la revendication 4 ou 5, **caractérisé en ce qu'**une vanne de gaz combustible (6) est fermée lorsque

a. la quantité de gaz combustible déterminée ne correspond pas à une quantité de gaz combustible prédéterminée, en particulier lorsque le profil de quantité de gaz combustible ne correspond pas à une rampe d'allumage prédéterminée, et/ou si
b. aucun signal de flamme n'est détecté.

**7.** Procédé selon l'une des revendications 1 à 6, **caractérisé en ce que**

a. l'on détermine si une condition de fonctionnement supplémentaire est remplie, dans lequel la condition de fonctionnement supplémentaire comprend la vérification indiquant si une température mesurée d'une chambre de combustion (5) du chauffage au gaz (1) ou une augmentation de température déterminée dans la chambre de combustion (5) est supérieure à un seuil prédéterminé et/ou **en ce que**
b. la quantité de gaz est déterminée après qu'un ventilateur (13) a commencé à apporter du gaz à la chambre de mélange (2) et/ou **en ce que**
c. la quantité de gaz combustible est déterminée après l'ouverture d'une vanne de gaz combustible (6) et/ou dans lequel
d. la quantité de gaz combustible est déterminée après que la quantité de gaz est déterminée et/ou **en ce que**
e. la quantité de gaz combustible est déterminée lorsque la quantité de gaz déterminée correspond à une quantité de gaz prédéterminée.

**8.** Procédé selon les revendications 1 à 7, **caractérisé en ce que**

a. l'on vérifie si une vitesse de ventilateur correspond à une vitesse de ventilateur prédéterminée attribuée à la quantité de gaz déterminée ou se situe dans une plage de vitesses de ventilateur prédéterminée attribuée à la quantité de gaz déterminée et/ou **en ce que**
b. l'on vérifie si un signal électrique fourni à une vanne de gaz combustible (6) correspond à un signal électrique attribué à la quantité de gaz combustible prédéterminée ou se situe dans une plage de signaux électriques prédéterminée attribuée à la quantité de gaz combustible prédéterminée.

**9.** Procédé selon la revendication 8, **caractérisé en ce que**

a. le processus de chauffage est exécuté lorsque la vitesse de ventilateur correspond à une vitesse de ventilateur prédéterminée attribuée à la quantité de gaz déterminée ou se situe dans une plage de vitesses de ventilateur prédéterminée attribuée à la quantité de gaz déterminée et lorsque l'au moins une condition est remplie et/ou **en ce que**
b. le processus de chauffage est exécuté lorsque le signal électrique fourni à une vanne de gaz combustible (6) correspond à un signal électrique attribué à la quantité de gaz combustible prédéterminée ou se situe dans une plage de signaux électriques prédéterminée attribuée à la quantité de gaz combustible prédéterminée et lorsque l'au moins une condition est remplie.

**10.** Chauffage au gaz (1) comprenant une chambre de mélange (2) pour mélanger un gaz et un gaz combustible, un brûleur (12) qui est agencé en aval de la chambre de mélange (2) et auquel un gaz mélangé de la chambre de mélange (2) peut être apporté, un premier capteur (7) pour mesurer la pression différentielle par unité de temps et/ou pour fournir un signal de capteur à une unité de commande (9) pour déterminer la quantité de gaz, définie par un volume par unité ou une masse par unité de temps, du gaz à apporter dans la chambre de mélange et un second capteur (8) pour mesurer la pression différentielle par unité de temps et/ou pour fournir un signal de capteur à l'unité de commande (9) pour déterminer la quantité de gaz combustible, définie par un volume par unité de temps ou une masse par unité de temps, du gaz combustible à apporter dans la chambre de mélange (2), dans lequel

l'unité de commande (9) est adaptée pour déterminer si une condition de fonctionnement du chauffage au gaz (1) est remplie en fonction de la quantité de gaz déterminée, dans lequel la condition de fonctionnement comprend une vérification indiquant si la quantité de gaz déterminée correspond à la quantité de gaz prédéterminée et l'unité de commande (9) est adaptée pour déterminer si une condition de fonctionnement ultérieure du chauffage au gaz (1) est remplie sur la base de la quantité de gaz combustible déterminée, la condition de fonctionnement ultérieure comprend une vérification indiquant si la quantité de gaz combustible déterminée correspond à une quantité de gaz combustible prédéterminée et dans lequel

la détermination de la condition de fonctionnement ultérieure est effectuée lorsque la condition de fonctionnement est remplie.

**11.** Chauffage au gaz (1) selon la revendication 10, **caractérisé en ce que**

a. le chauffage au gaz (1) comprend un capteur de température (17) pour mesurer la température dans une chambre de combustion (5) et/ou un brûleur (12) et/ou **en ce que**
b. l'unité de commande (9) est adaptée pour vérifier si une vitesse de ventilateur correspond à une vitesse de ventilateur prédéterminée attribuée à la quantité de gaz déterminée ou se situe dans une plage de vitesses de ventilateur prédéterminée attribuée à la quantité de gaz déterminée et/ou **en ce que**
c. l'unité de commande (9) est adaptée pour vérifier si un signal électrique fourni à la vanne de gaz combustible (6) correspond à un signal électrique attribué à la quantité de gaz combustible prédéterminée ou se situe dans une plage de signaux électriques prédéterminée attribuée à la quantité de gaz combustible prédéterminée et/ou **en ce que**
d. le chauffage au gaz (2) est conçu pour utiliser du gaz combustible qui comprend au moins 10 % mol, en particulier au moins 95 % mol, d'hydrogène.

**12.** Chaudière, en particulier chaudière à condensation, permettant de chauffer un liquide, en particulier de l'eau, **caractérisée en ce que** la chaudière comprend un chauffage au gaz (2) selon la revendication 11, un échangeur de chaleur avec une chambre de combustion, dans laquelle le brûleur (12) du chauffage au gaz (1) est au moins partiellement agencé à l'intérieur de la chambre de combustion.

**13.** Système de chauffage comprenant un chauffage au gaz selon la revendication 10 ou 11 ou une chaudière selon la revendication 12 et comprenant en outre une pile à combustible et/ou une pompe à chaleur, de préférence une pompe à chaleur à absorption de gaz, et/ou au moins un module photovoltaïque (PV).

**14.** Utilisation d'un chauffage au gaz selon la revendication 10 ou 11 ou d'une chaudière selon la revendication 12 dans des applications de chauffage à l'hydrogène ou à l'hydrogène contenant du gaz combustible ou des applications de chauffage au gaz naturel.

**15.** Produit programme d'ordinateur comprenant des instructions qui, lorsque le programme est exécuté par une unité de commande, amènent l'unité de commande à réaliser le procédé selon l'une des revendications 1 à 9.

Figure 1

EP 4 295 083 B1

Figure 2

## Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5486107 A
- US 6561791 B1
- WO 2020148434 A1
- DE 202018101271 U1
- EP 3683500 A1
- EP 2574918 B1
- EP 3825623 A1
- WO 2019185181 A1